# EUROPÄISCHE PATENTSCHRIFT

(11) **EP 0 787 059 B1**
(45) Veröffentlichungstag und Bekanntmachung des Hinweises auf die Patenterteilung: **29.04.1998**
(21) Anmeldenummer: 95935448.1
(22) Anmeldetag: 14.10.1995
(51) Int. Cl.: B23K 26/14, B23K 26/08

(54) **VERFAHREN ZUM KÜHLEN EINES SCHWEISSNAHTBEREICHS BEIM LASERSCHWEISSEN UND VORRICHTUNG ZUM DURCHFÜHREN DES VERFAHRENS**
PROCESS AND DEVICE FOR COOLING THE AREA OF A WELD DURING LASER WELDING
PROCEDE ET DISPOSITIF DE REFROIDISSEMENT DE LA ZONE D'UNE SOUDURE PENDANT LE SOUDAGE LASER

(30) Priorität: 18.10.1994 DE 4437191
(43) Veröffentlichungstag der Anmeldung: 06.08.1997
(73) Patentinhaber: THYSSEN INDUSTRIE AG, 45128 Essen (DE)
(72) Erfinder: ALBER, Gerhard, D-88213 Ravensburg (DE); SCHMEH, Alexander, D-88213 Ravensburg (DE)
(74) Vertreter: Dahlkamp, Heinrich-Leo
(86) Internationale Anmeldenummer: EP9504044
(87) Internationale Veröffentlichungsnummer: WO9611770

(56) Entgegenhaltungen:
- DE-A- 4 010 077
- PATENT ABSTRACTS OF JAPAN vol. 7 no. 25 (M-190) ,2.Februar 1983 & JP,A,57 181791 (MASANORI WATANABE) 9.November 1982,

## Beschreibung

Die Erfindung betrifft ein Verfahren zum Kühlen eines Schweißnahtbereiches beim Laserschweißen von Blechen oder Bändern, insbesondere zur Verwendung im Karosseriebau, durch gerichtetes Zuführen eines flüssigen Kühlmittels.

Des weiteren betrifft die Erfindung eine Vorrichtung zum Durchführen dieses Verfahrens.

Beim Laserschweißen von Blechen und Bändern, die z.B. für den Karosseriebau bestimmt sind, kommt der Qualität der Schweißnaht große Bedeutung zu. Beim Stumpfschweißen ist die Breite des Spaltes ursächlich für die Nahtqualität. Wird dieser Spalt zu groß, 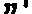 fällt" der Laserstrahl durch, oder aber die Nahtqualität verschlechtert sich bis zum Ausschuß. Durch den hohen Energieeintrag am Fokus des Laserstrahls besteht die Gefahr, daß diese eingebrachte Energie aufgrund der Wärmedehnungen im Blech einen dem Fokuspunkt vorlaufenden Spalt entstehen läßt, der die Qualität der Schweißnaht stark beeinträchtigt. Deshalb kommt einer Kühlung des Schweißnahtbereiches erhöhte Bedeutung zu, da durch effektive Kühlung die Spaltbildung verhindert werden kann.

Beim Laserschweißen ist das Kühlen durch die Umgebungsluft ebenso bekannt wie die Zufuhr von Kühlluft durch Düsen oder das Zuführen von Gasen wie Helium und Argon. Auch wurde schon das Kühlen mittels Spannbacken bzw. Kupferleisten angewendet. Zum Beispiel ist aus der EP 0450 349 das Kühlen eines Schweißbereiches beim Laserschweißen mit gasförmigen Medien vorbekannt.

Die zum Stande der Technik zählenden Verfahren sind zum Teil bzgl. der erzielbaren Kühlleistungen unbefriedigend, zum Teil erfordern sie einen hohen apparativen Aufwand. Soweit es um eine Kühlung mittels Gasen geht, müssen erhebliche Gasmengen auf die Schweißnaht geblasen werden, um wenigstens zu einem einigermaßen befriedigenden Ergebnis zu gelangen. Sofern das Kühlen des Schweißnahtbereichs mittels Spannbacken, z. B. für Kupferleisten (EP 0 189 806) vorgenommen werden soll, müssen diese besonders gesteuert und untergebracht werden. Spannbackenkühlung ist darüber hinaus beim Schweißen im kontinuierlichen Durchlaufverfahren nicht möglich.

Durch die DE 40 10 077 ist ein Verfahren zum kontinuierlichen Verschweißen von auf Stoß geführten Bändern (Blechen) ohne Zusatzwerkstoff mittels eines Laserstrahls vorbekannt, wobei die Bänder im Bereich der Schweißnaht in Bandlaufrichtung unmittelbar hinter dem Schweißfokus gekühlt werden, wodurch die Kühlintensität in Abhängigkeit von der Breite des von den Stoßkanten der Bänder in Bandlaufrichtung unmittelbar vor dem Schweißfokus gebildeten Spaltes derart geregelt wird, daß dessen Breite innerhalb vorgegebener Toleranzwerte bleibt. Dabei ist es auch durch dieses Verfahren bekannt, die Kühlung auf beiden Seiten der Bänder vorzunehmen. Zur Kühlung wird ein gasförmiges Medium, insbesondere Luft vorgeschlagen. Um möglichst nah an den Schweißfokus heranzukommen, können die Blasdüsen mit einem schmalen Schnabel bis in den Spalt zwischen den Spannrollen hineinragen. Die Strahlrichtung des aufgeblasenen gasförmigen Mediums ist von dem Schweißfokus weggerichtet. Die Regelung der Kühlintensität des aufgeblasenen gasförmigen Mediums erfolgt über deren Strömungsgeschwindigkeit. Im Zusammenhang mit diesem Verfahren wird eine Vorrichtung zum kontinuierlichen Verschweißen von auf Stoß geführten Bändern (Blechen) an deren Stoßkanten mittels eines ortsfesten Laserstrahls mit an beiden Seiten der zu verschweißenden Bänder paarweise senkrecht zu deren Laufrichtung angeordneten Spannrollen vorgeschlagen, die im Bereich des Stoßes der Bänder einen Spalt bilden, durch den der ortsfeste Laserstrahl auf die zu verschweißenden Stoßkanten trifft. Hierzu wird eine Regeleinrichtung mit einer in Bandlaufrichtung unmittelbar vor dem Schweißfokus angeordneten Meßeinrichtung für die den Istwert bildende Breite des von den Stoßkanten der Bänder gebildeten Spaltes und einer in Bandlaufrichtung hinter dem Schweißfokus angeordneten und auf die Bänder im Bereich der Schweißnaht einwirkenden Kühleinrichtung verwendet, deren Kühlintensität in Abhängigkeit von dem von der Meßeinrichtung gelieferten Istwert für die Spaltbreite im Sinne einer innerhalb vorgegebener Toleranzwerte liegenden konstanten Spaltbreite eingestellt wird. Die Meßeinrichtung besteht aus einem auf der einen Bandseite angeordneten Strahler und einem auf der anderen Bandseite angeordneten Strahlungsempfänger. Dieser Strahler kann ein Laser sein, während der Strahlungsempfänger eine Diodenzeilenkamera ist. Die Kühleinrichtung ist auf beiden Bandseiten angeordnet. Die Kühleinrichtung weist außerdem Blasdüsen für das gasförmige Medium auf. Die Gaskühlung hat einen erheblichen Gasverbrauch und eine nur eingeschränkte Kühlleistung.

Die DE 30 37 981 betrifft ein Verfahren zum Laserstrahl-Schmelz- und Brennschneiden, Schweißen, Sublimierschneiden, Bohren, Markieren sowie zur Feinbearbeitung von Werkstoffen, wobei ein Laserstrahl erzeugt, gelenkt, durch eine Linse fokussiert und auf die Oberfläche des zu bearbeitenden Werkstücks geworfen wird, wobei ferner dem dadurch erzeugten Brennfleck koaxial zum Laserstrahl ein inertes oder reaktives Gas zugeleitet wird. Der Brennfleck kann ohne zusätzliche seitliche Korrektur der Werkstückkoordinaten und/oder einer Düsenöffnung des Laserstrahls in Richtung der Laserstrahlachse relativ zu einem auf der Achse liegenden festen Bezugspunkt verschoben sein, wobei die Werkstückoberfläche im Brennfleck und in dessen unmittelbarer Umgebung durch einen konzentrisch auf dieses geführte Kühlmittel in Form eines Gas und/oder Flüssigkeitsstromes gekühlt wird. Dabei soll die Anordnung so getroffen sein, daß mindestens ein auf einem Kegelmantel eines zum Laserstrahl koaxialen Kegels liegender Flüssigkeitsstrahl, dessen Spitze wenigstens annähernd im Brennfleck liegt, als Kühlmittel des Werkstücks herangezogen wird.

Aus der DE 41 33 350 ist ein Verfahren zum Schneiden eines vorgegebenen Musters durch die Wand eines hohlen metalliscnen Werkstückes mit einem Laser vorbekannt, wobei ein flüssiges Kühlmittel durch die Werkstückhalterung und das metallische Werkstück gepumpt wird, so daß Kühlmittel während des Einschneidens des Musters mit einer Laserschneideinrichtung durch das Werkstück fließt und dabei zumindest einen Teil der Innenfläche des Werkstücks berührt, um Schlacketeilchen auszuschwemmen, die sich während des Schneidens bilden, wodurch ein Anhängen der Schlacketeilchen an der Innenseite des Werkstücks minimiert oder ausgeschlossen wird. Als Kühlmittel wird eine Wasser/Öl-Mischung im Bereich von etwa 50 Teilen Wasser und 50 Teilen Öl bis etwa 90 Prozent Wasser und 10 Prozent Öl, jeweils bezogen auf das Volumen, verwendet. Bei dieser Flüssigkeitskühlung besteht die Gefahr, daß Flüssigkeit in den Fokus bzw. das Schweißbad hineinläuft.

Der Erfindung liegt zunächst die Aufgabe zugrunde, ein gattungsgemäß vorausgesetztes Verfahren derart auszubilden, daß sich bei hoher Schweißleistung eine stets gleichbleibende Schweißnahtqualität erzielen läßt. Des weiteren liegt der Erfindung die Aufgabe zugrunde, eine zum Durchführen des erfindungsgemäß angestrebten Verfahrens vorteilhafte Vorrichtung zu schaffen, die konstruktiv einfach ist und sich insbesondere zum Schweißen von im Karosseriebau benötigten Blechen und Bändern, die auch beidseitig beschichtet bzw. behandelt sein können, eignet.

Die Aufgabe wird durch die den in Patentansprüchen 1 und 12 wiedergegebenen Merkmalen gelöst. Die Unteransprüche 2 bis 11 und 13 bis 15 enthalten sinnvolle ergänzende Merkmale.

Bei dem erfindungsgemäßen Verfahren wird ein Gasvorhang aus Inertgas,
z. B. aus Argon oder Helium, erzeugt, der verhindert, daß das Kühlwasser zu nahe an den Schweißfokus gelangt und eventuell dadurch die Schweißnaht negativ beeinflußt. Auf diese Weise kann die Kühlung der Bleche oder Bänder durch ein flüssiges Medium, z. B. durch Wasser, Wasser mit korrosionshemmenden Zusätzen, durch Öle, durch flüssigen Stickstoff oder dergleichen, realisiert werden, ohne daß Nachteile zu befürchten sind.

Weitere erfinderische Ausgestaltungen sind in den Patentansprüchen 2 bis 15 beschrieben.

Gemäß Patentanspruch 2 wird das Inertgas wie ein Vorhang zwischen der Zone, in der sich das Schutzgas befindet und dem flüssigen Kühlmittel, unter Überdruck gegenüber der Umgebungsluft, eingebracht.

Dabei kann das flüssige Kühlmittel ein- und/oder beidseitig dem Schweißnahtbereich zugeführt werden. Auch das Inertgas kann in gleicher Weise, also ein und/oder beidseitig in der beschriebenen Art und Weise Zugeführt werden. Dadurch hat man es in der Hand, je nach Blechdicke und Energieeintrag die erforderliche intensive Kühlung im Schweißnahtbereich, und zwar unmittelbar vor dem Fokuspunkt, unter Beibehaltung der hohen Schweißnahtgüte zu erzielen.

Das flüssige Kühlmittel kann nach Patentanspruch 3 als Schwall, Strahlvortrag oder Brause auf den Schweißnahtbereich aufgebracht werden, während das Inertgas als dünner Vorhang oder als eine Art Druckkissen zwischen dem Schweißnahtbereich und dem Kühlmittel zugeführt wird. Dadurch ist es möglich, entweder einen kleinen Bereich oder auch einen größeren Flächenabschnitt in dem erforderlichen Maße zu kühlen.

Nach Patentanspruch 4 wird das Volumen des Kühlmittels und/oder des Inertgases pro Zeiteinheit gesteuert oder geregelt. Dies kann z. B. durch ein Ventil von Hand oder automatisch geschehen.

Zum Beispiel kann gemäß Patentanspruch 5 das Volumen des Kühlmittels und/oder des Inertgases pro Zeiteinheit durch eine Temperaturregelung geregelt werden. Hierzu kann z. B. die Temperatur im vorlaufenden Nahtspalt oder im Bereich des Nahtquerschnittes erfaßt und bei Überschreiten eines vorgegebenen Sollwertes - bei entsprechender Toleranz - der Volumenstrom des Kühlmittels entsprechend geregelt werden.

Es ist aber auch gemäß Patentanspruch 6 möglich, als Stellgröße die Spreizkraft heranzuziehen, mit der die Bleche oder Bänder in der Vorrichtung gehalten werden. Hierzu können die Backen in gewisser Hinsicht schwimmend oder beweglich gelagert sein, z. B. sich gegen Kolben abstützen und den Kühlmittel- und/oder den Inertgasstrom je nach Spreizkraft regeln.

Nach Patentanspruch 7 kann der Volumenstrom in Abhängigkeit von der Blechdicke gesteuert werden.

Gemäß Patentanspruch 8 kann das flüssige Kühlmittel in einem gewissen Abstand vom Fokus abgesaugt und/oder aufgefangen werden.

Nach Patentanspruch 9 wird der Schweißnahtbereich von dem aufgebrachten flüssigen Medium durch Heißluft oder induktiv getrocknet.

Um ein direktes Hineinspritzen des flüssigen Kühlmittels in den Schweißfokus zu vermeiden, wird das flüssige Kühlmittel und das Inertgas vom Fokus weggerichtet auf den zu kühlenden Schweißnahtbereich aufgebracht.

Die zum Kühlen des Schweißnahtbereiches angewendete Vorrichtung ist konstruktiv relativ einfach und macht keine besonderen Schutzmaßnahmen erforderlich. Insbesondere werden die Abmessungen quer zur Längsrichtung der Bleche und Bänder nicht oder nicht wesentlich vergrößert, da die erfindungsgemäße Vorrichtung relativ kompakt baut, was insbesondere auch für die Dreifachdüse zum Zuführen von Schutzgas für den Schweißfokus, zum Zuführen des Inertgases und des flüssigen Kühlmittels gilt.

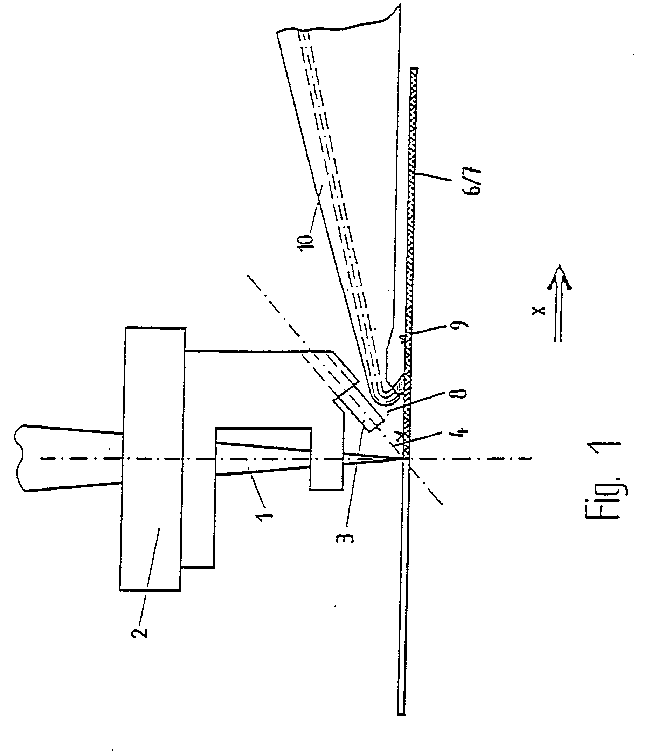

In den beigefügten Figuren 1 bis 3 ist die Erfindung - teils schematisch - beispielsweise veranschaulicht. Es zeigen:
- Figur 1: eine Vorrichtung gemäß der Erfindung in der Seitenansicht, teils abgebrochen dargestellt;
- Figur 2: eine Teil-Draufsicht auf zwei miteinander zu verschweißende Bleche bzw. Bänder, und
- Figur 3: eine als Triplexdüse ausgebildete Düse gemäß der Erfindung in detaillierter Darstellung.

Mit dem Bezugszeichen 1 ist ein Laserstrahl bezeichnet, der durch eine im einzelnen nicht dargestellte übliche Laserschweißvorrichtung erzeugt wird.

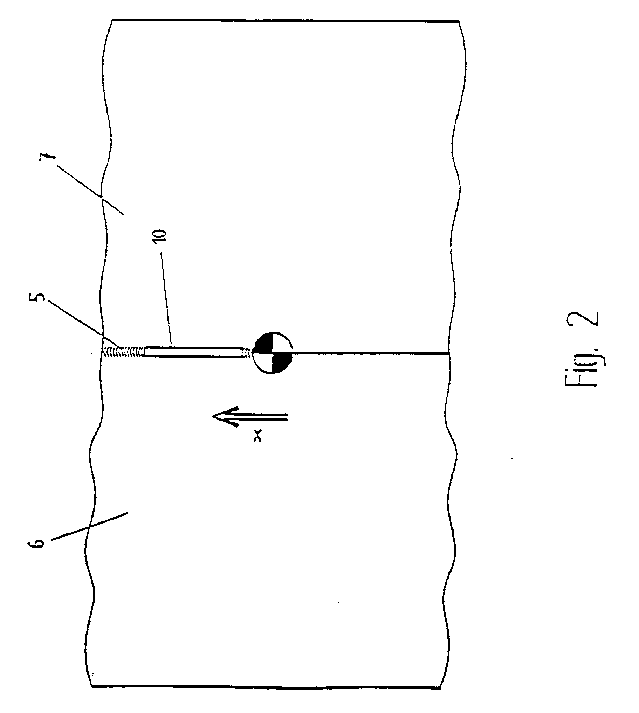

Das Bezugszeichen 2 bezeichnet dagegen einen Schweißkopf, während bei 3 eine Schutzgasdüse angedeutet ist, durch die ein geeignetes Schutzgas dem Schweißnahtbereich 4 zugeführt wird. Die Schweißnaht 5 selbst ist nur in Fig. 2 schematisch angedeutet, die die stumpf aneinander stoßenden Bleche oder Bänder 6 bzw. 7 miteinander verbindet.

In den durch die Schutzgasdüse 3 einerseits und die Oberfläche 9 der Bleche bzw. Bahnen 6, 7 andererseits gebildeten spitzwinkligen Bereich 8 mündet ein Rohr oder eine Düse 10 zum Zuführen eines geeigneten flüssigen Kühlmittels, z. B. Wasser, aus. Die Mündungsöffnung 10 kann kreisrund, aber auch anders, z. B. rechteckförmig, gestaltet sein. Im letzteren Fall erstreckt sie sich über einen gewissen Bereich quer zur Schweißrichtung X, in der sich der Laserstrahl 1 relativ zur Schweißnaht 5 bewegt.

Eine Auffangvorrichtung unterhalb der Bleche oder Bänder 6 bzw. 7, ein Trog oder eine Absaugvorrichtung, oder aber eine Beheizung mittels Heißluft, oder eine induktive Beheizung der Bleche oder Bänder 6 bzw. 7, sind nicht dargestellt. Dargestellt wurden ebenfalls nicht die Transportvorrichtungen, z. B. Häspel, für das Aufwickeln von Coils der Bänder 6 und 7, Greif- und Stapelvorrichtungen für Bleche 6 und 7 und die Hilfseinrichtungen zum Zuführen sowie zum Steuern und/oder Regeln des flüssigen Kühlmittels, auch nicht Pumpen und motorische Antriebe.

Mit 11 ist ein Kanal oder Rohr bezeichnet, durch den bzw. durch das ein geeignetes Schutzgas dem Schweißnahtbereich über eine Düse 12 zugeführt wird.

In einem gewissen Abstand in Schweißrichtung hinter dem Kanal 11 ist ein weiterer Kanal 13 angeordnet, der ebenfalls in eine Düse 14 ausmündet. Durch den Kanal 13 wird ein Inertgas, z. B. Argon, Krypton, Helium oder dergleichen, zugeführt.

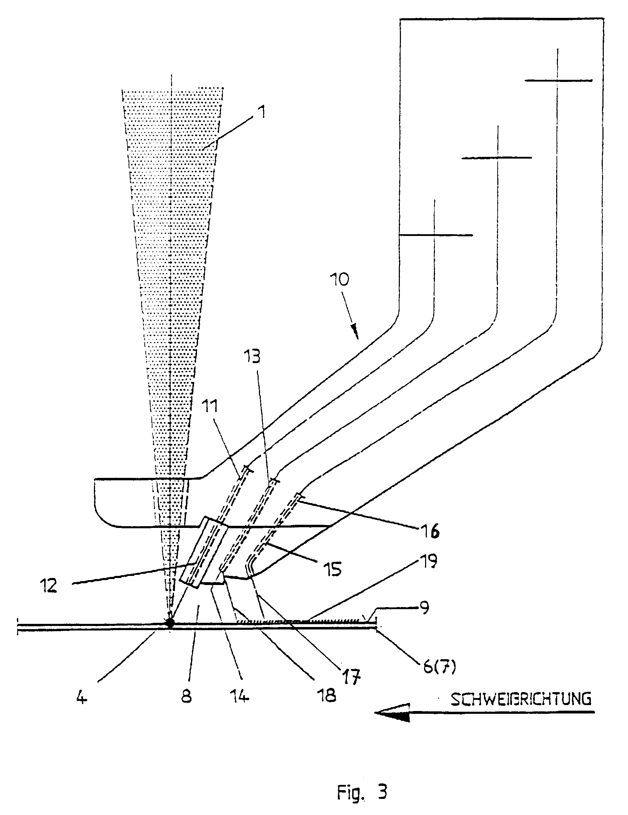

Abermals in Schweißrichtung hinter der Düse 14 ist eine weitere Düse 15 angeordnet, die an einen Kanal 16 angeschlossen ist. Dem Kanal 16 wird ein flüssiges Kühlmittel, z. B. Wasser, zugeführt. Die Mündung ist so gerichtet, daß der Wasservorhang, Wasserschwall oder der Wasserstrahl von dem Schweißnahtbereich 4 weggerichtet wird. Dies ist bei 17 in Figur 3 angedeutet. Bei 19 wurde der Wasserfilm auf dem Blech 6, 7 ebenfalls schematisch kenntlich gemacht.

Wie man erkennt, wird durch den Austritt des Inertgases im Bereich der Düse 14 ein Gasvorhang 18 erzeugt, der den Schweißnahtbereich 4 von dem Wasserschwall oder Wasservorhang 17 oder dergleichen abtrennt.

Sämtliche Düsen 12, 14 und 15 können als Breitbanddüsen, z. B. mit quadratischen oder im Querschnitt rechteckförmigen Mündungsöffnungen ausgebildet sein. Die Mündungsöffnung der Schutzgasdüse 12 ist auf den Schweißnahtbereich 4 hingerichtet, während die Mündungsöffnungen der Düsen 14 und 15 vom Schweißnahtbereich um einen gewissen Winkel weggerichtet sind. Deshalb wurde in Figur 3 der Gasvorhang 18 schematisch weggerichtet von dem Schweißnahtbereich 4 angedeutet.

### Bezugszeichenliste

- 1: Laserstrahl
- 2: Schweißkopf
- 3: Schutzgasdüse
- 4: Schweißnahtbereich
- 5: Schweißnaht
- 6: Blech, Band
- 7: Blech, Band
- 8: Bereich, spitzwinkliger
- 9: Oberfläche
- 10: Rohr, Düse
- 11: Kanal, Rohr
- 12: Schutzgasdüse
- 13: Kanal
- 14: Düse für Schutzgasvorhang
- 15: Düse für Kühlwasser
- 16: Kanal
- 17: Wasserschwall, Wasservorhang, Wasserstrahl
- 18: Gasvorhang
- 19: Flüssigkeit auf dem Blech
- X: Schweißvorrichtung

## Patentansprüche

1. Verfahren zum Kühlen eines Schweißnahtbereiches (4) beim Laserschweißen von Blechen oder Bändern (6, 7), insbesondere zur Verwendung im Karosseriebau, durch gerichtetes Zuführen eines flüssigen Kühlmittels, derart, daß der Schweißnahtbereich (4) so dicht wie möglich an dem Schweißfokus gekühlt wird, wobei in den Bereich zwischen dem flüssigen Kühlmittel und dem Schweißnahtbereich (4) kontinuierlich unter Druck Inertgas (Helium, Argon oder dergleichen) eingebracht wird, das den Schweißnahtbereich (4) von dem flüssigen Kühlmittel (17,19) trennt.

2. Verfahren nach Anspruch 1, **dadurch gekennzeichnet,** daß das Inertgas und das flüssige Kühlmittel der Ober- und/oder Unterseite der Bleche bzw. Bänder (6 bzw. 7) unter Überdruck zugeführt wird.

3. Verfahren nach Anspruch 1 oder 2, **dadurch gekennzeichnet,** daß das flüssige Kühlmittel und das Inertgas als Schwall, Strahl, Brause oder Vorhang zugeführt wird.

4. Verfahren nach Anspruch 1 oder einem der folgenden, **dadurch gekennzeichnet,** daß das Volumen des flüssigen Kühlmittels und des Inertgases pro Zeiteinheit, vorzugsweise in Abhängigkeit von der Schweißgeschwindigkeit, gesteuert oder geregelt wird.

5. Verfahren nach Anspruch 1 oder einem der folgenden, **dadurch gekennzeichnet,** daß das Volumen des flüssigen Kühlmittels und des Inertgases pro Zeiteinheit durch eine Temperaturregelung geregelt wird.

6. Verfahren nach Anspruch 1 oder einem der Ansprüche 2 bis 4, **dadurch gekennzeichnet,** daß das Volumen des flüssigen Kühlmittels und des Inertgases pro Zeiteinheit durch eine Spreizkraftregelung (Kraft für das Zusammenhalten der Bleche bzw. Bänder (6, 7) durch Aufrechterhaltung des eingestellten Schweißnahtspaltes) geregelt wird.

7. Verfahren nach Anspruch 1 oder einem der Ansprüche 2 bis 4, **dadurch gekennzeichnet,** daß das Volumen des flüssigen Kühlmittels und des Inertgases pro Zeiteinheit in Abhängigkeit von der Dicke der miteinander zu verschweißenden Bleche oder Bänder (6, 7) gesteuert bzw. geregelt wird.

8. Verfahren nach Anspruch 1 oder einem der folgenden, **dadurch gekennzeichnet,** daß das flüssige Kühlmittel in Abstand von der Schweißnaht (5) abgesaugt und/oder aufgefangen wird.

9. Verfahren nach Anspruch 1 oder einem der Ansprüche 2 bis 7, **dadurch gekennzeichnet,** daß das flüssige Kühlmittel durch Beheizen der Umgebung des Schweißnahtbereiches , z.B. induktiv, entfernt wird.

10. Verfahren nach Anspruch 1 oder einem der folgenden, **dadurch gekennzeichnet,** daß das flüssige Kühlmittel und das Inertgas in Schweißrichtung hinter dem Schweißkopf (2) und dem Schweißnahtbereich (4) von diesem weggerichtet zugeführt wird.

11. Verfahren nach Anspruch 1 oder einem der folgenden, **dadurch gekennzeichnet,** daß das Volumen des flüssigen Kühlmittels pro Zeiteinheit in Abhängigkeit von dem vor dem Schweißfokus, vorzugsweise optisch mit einer Kamera, kontinuierlich erfaßten Abstand der Bleche bzw. Bänder (6, 7) geregelt wird.

12. Vorrichtung zum Durchführen des Verfahrens nach Anspruch 1 oder einem der folgenden, mit einer Laserstrahlschweißeinrichtung, mit einem Schweißkopf (2) und wenigstens einer Schutzgasdüse (3) zum Zuführen von Schutzgas sowie mindestens einer Rohrleitung, Düse (15) oder dergleichen zum gerichteten Zuführen eines Kühlmittels zum Kühlen des Schweißnahtbereiches, (4) **dadurch gekennzeichnet,** daß die Vorrichtung eine als Triplexdüse ausgebildete Düse aufweist, die drei in Schweißrichtung hintereinander angeordnete Düsen (12, 14, 15) besitzt, wobei die dem Schweißnahtbereich (4) zugekehrte, vordere Düse (12) zum Zuführen von Schutzgas, die in Schweißrichtung dahinter angeordnete Düse (14) zum Zuführen eines Inertgases und die in Schweißrichtung dahinter angeordnete dritte Düse (15) zum Zuführen des flüssigen Kühlmittels (17) dient und daß alle drei Düsen (12, 14, 15) an getrennte Zuführungsleitungen bzw. Kanäle (11, 13, 16) angeschlossen sind, wobei die Vorrichtung an dem Schweißkopf (2) oder am stationären Maschinenbett befestigt ist.

13. Vorrichtung nach Anspruch 12, **dadurch gekennzeichnet,** daß in Schweißrichtung hinter dem Schweißkopf (2) eine Absaugvorrichtung zum Entfernen des flüssigen Kühlmittels angeordnet ist.

14. Vorrichtung nach Anspruch 12, **dadurch gekennzeichnet,** daß im Abstand hinter dem Schweißkopf (2) - in Schweißrichtung gesehen - eine Trockenvorrichtung zum Zuführen von Heißluft, oder eine Vorrichtung zur induktiven Aufwärmung des zu trocknenden Bereiches der Bleche bzw. Bänder (6, 7) angeordnet ist.

15. Vorrichtung nach Anspruch 12 oder einem der folgenden, **dadurch gekennzeichnet,** daß die Mündungsöffnung der in Schweißrichtung vorderen Düse (12) auf den Schweißnahtbereich (4) hingerichtet ist, während die Mündungsöffnungen der dahinterliegenden Düsen (14, 15) vom Schweißnahtbereich (4) weggerichtet sind, derart, daß die mittlere, zum Zuführen des Inertgases dienende Düse (14) einen Gasvorhang zwischen der in Schweißrichtung vorderen Düse (12) und der Düse (15) zum Zuführen des flüssigen Kühlmittels aufbaut.

## Claims

1. Process for the cooling of a welding seam area (4) during laser welding of plates or strips (6, 7), particularly for use in car body construction, by the directed infeed of a liquid cooling agent in such a manner that the welding seam area (4) is cooled as close to the welding focus as possible with inert gas (helium, argon or the like) being constantly fed under pressure to the area between the liquid coolant and the welding seam area (4), said gas separating the welding seam area (4) from the liquid coolant (17, 19).

2. Process according to Claim 1 **characterized in that** the inert gas and the liquid coolant is fed to the top and/or bottom side of the plates or strips (6 or 7) under gauge pressure.

3. Process according to Claim 1 or 2 **characterized in that** the liquid coolant and the inert gas are fed in in the form of a gush, jet, shower or curtain.

4. Process according to Claim 1 or one of the following **characterized in that** the volume of the liquid coolant and the inert gas per unit of time is controlled or regulated, preferably as a function of the welding speed.

5. Process according to Claim 1 or one of the following **characterized in that** the volume of the liquid coolant and the inert gas per unit of time is regulated by means of a temperature control system.

6. Process according to Claim 1 or one of the Claims 2 to 4 **characterized in that** the volume of the liquid coolant and the inert gas per unit of time is regulated by means of a spreading force control feature (force required to hold the plates or strips (6, 7) together by maintaining the set welding seam gap).

7. Process according to Claim 1 or one of the Claims 2 to 4 **characterized in that** the volume of the liquid coolant and the inert gas per unit of time is controlled or regulated as a function of the thickness of the plates or strips (6, 7) to be joined by welding.

8. Process according to Claim 1 or one of the following **characterized in that** the liquid coolant is withdrawn and/or intercepted at a distance away from the welding seam (5).

9. Process according to Claim 1 or one of the Claims 2 to 7 **characterized in that** the liquid coolant is removed by heating, eg inductively, the surroundings of the welding seam area.

10. Process according to Claim 1 or one of the following **characterized in that** the liquid coolant and the inert gas is fed in at a location behind the welding head (2) and the welding seam area (4) in the direction of weld progression, and directed away from the seam area.

11. Process according to Claim 1 or one of the following **characterized in that** the volume of the liquid coolant per unit of time is regulated as a function of the distance of the plates or strips (6, 7) continuously detected ahead of the welding focus, preferably optically by means of a camera.

12. Apparatus for the implementation of the process according to Claim 1 or one of the following, including a laser beam welding equipment, a welding head and at least one protective gas nozzle for the feeding of protective gas as well as at least one ducting, nozzle or similar means for the directed feeding of a cooling agent for the purpose of cooling the welding seam area, **characterized in that** the apparatus is fitted with a nozzle designed as triplex nozzle accommodating three nozzles (12, 14, 15) arranged one after the other in the direction of weld progression, with the front nozzle (12) facing the weld seam area (4) serves to feed in protective gas, the nozzle (14) behind the front nozzle in the direction of weld progression to feed in an inert gas, and the third nozzle (15) arranged behind this nozzle in the direction of weld progression to feed in a liquid cooling agent (17), with all three nozzles (12, 14, 15) being connected to separate supply lines or ducts (11, 13, 16), with the apparatus being fixed on the welding head (2) or on a stationary machine bed.

13. Apparatus according to Claim 12 **characterized in that** a withdrawal system is arranged behind the welding head (2) in the direction of weld progression which serves to remove the liquid coolant.

14. Apparatus according to Claim 12 **characterized in that** a drying device for the supply of hot air is arranged at a distance behind the welding head (2) - seen in the direction of weld progression - or a device for the inductive heating of the area of the plates or strips (6, 7) to be dried.

15. Apparatus according to Claim 12 or one of the following **characterized in that** the mouth opening of the front nozzle (12) in the direction of weld progression is directed towards the welding seam area (4) whereas the mouth openings of the nozzles (14, 15) behind said nozzle being directed away from the welding seam area (4) in such a manner that the middle nozzle (14) meant to supply inert gas builds up a gas curtain between the front nozzle (12) in the direction of weld progression and nozzle (15) feeding in the liquid coolant.

## Revendications

1. Procédé de refroidissement d'une zone de soudure (4) lors du soudage au laser de tôles ou de feuillards (6, 7), en particulier pour l'utilisation dans la construction de carrosseries, en amenant ponctuellement un agent de refroidissement liquide de manière à ce que la zone de la soudure (4) soit refroidie aussi près que possible du point focal, du gaz inerte (hélium, argon ou autre gaz du genre) étant amené en continu sous pression dans la zone entre l'agent de refroidissement liquide et la zone de la soudure (4), séparant ainsi la zone de la soudure (4) de l'agent de refroidissement liquide (17, 19).

2. Procédé selon la revendication 1, **caractérisé en ce que** le gaz inerte et l'agent de refroidissement sont amenés sous pression sur la face supérieure et/ou inférieure des tôles ou des feuillards (6 ou 7).

3. Procédé selon la revendication 1 ou 2 **caractérisé en ce que** l'agent de refroidissement liquide et le gaz inerte sont amenés sous forme de vague, de jet, de douche ou de rideau.

4. Procédé selon la revendication 1 ou l'une des revendications suivantes **caractérisé en ce que** le volume de l'agent de refroidissement et du gaz inerte est commandé ou réglé par unité de temps, de préférence en fonction de la rapidité de soudage.

5. Procédé selon la revendication 1 ou l'une des revendications suivantes **caractérisé en ce que** le volume de l'agent de refroidissement et du gaz inerte est commandé ou réglé par unité de temps par un réglage de température.

6. Procédé selon la revendication 1 ou l'une des revendications 2 à 4 **caractérisé en ce que** le volume de l'agent liquide de refroidissement liquide et du gaz inerte est réglé par unité de temps par un réglage de l'effort d'écartement (effort pour la tenue des tôles ou des feuillards (6, 7) en maintenant l'écartement des bords de soudure réglée).

7. Procédé selon la revendication 1 ou l'une des revendications 2 à 4 **caractérisé en ce que** le volume de l'agent de refroidissement liquide et du gaz inerte est commandé ou réglé par unité de temps en fonction de l'épaisseur des tôles ou feuillards (6, 7) qui sont à souder les uns aux autres.

8. Procédé selon la revendication 1 ou l'une des revendications suivantes **caractérisé en ce que** l'agent de refroidissement est aspiré et/ou recueilli à une certaine distance de la soudure (5).

9. Procédé selon la revendication 1 ou l'une des revendications 2 à 7 **caractérisé en ce que** l'agent de refroidissement liquide est éliminé en chauffant l'entourage de la zone de la soudure, par chauffage inductif par exemple.

10. Procédé selon la revendication 1 ou l'une des revendications suivantes **caractérisé en ce que** l'agent de refroidissement liquide et le gaz inerte sont amenés dans le sens du soudage derrière la tête de soudage (2) et sur la zone de soudure en étant dirigés dans le sens opposé à celle-ci (4).

11. Procédé selon la revendication 1 ou l'une des revendications suivantes **caractérisé en ce que** le volume de l'agent de refroidissement liquide est réglé par unité de temps en fonction de la distance des tôles ou des feuillards (6, 7) saisie continuellement devant le point focal, de préférence par voie optique à l'aide d'une caméra.

12. Dispositif pour la réalisation du procédé selon la revendication 1 ou l'une des revendications suivantes, avec un dispositif de soudage au laser, avec une tête de soudage (2) et au moins une buse de gaz de protection (3) pour l'amenée de gaz de protection ainsi qu'au moins un tube, une buse (15) ou dispositif du genre pour l'amenée ponctuelle d'un agent de refroidissement pour refroidir la zone de soudure (4) **caractérisé en ce que** le dispositif présente une buse sous forme de buse triplex pourvue de trois buses (12, 14, 15) situées les unes derrière les autres dans le sens de soudage, la buse avant (12) opposée à la zone de la soudure (4) servant à l'amenée du gaz de protection, la buse (14) située derrière dans le sens du soudage à l'amenée d'un gaz inerte et la troisième buse (15) située derrière dans le sens du soudage à l'amenée de l'agent de refroidissement liquide (17), les trois buses (12, 14, 15) étant raccordées à trois conduites d'amenée séparées ou canaux (11, 13, 16) et le dispositif étant fixé à la tête de soudage (2) ou au lit stationnaire de la machine.

13. Dispositif selon la revendication 12 **caractérisé en ce qu'un** dispositif d'aspiration pour l'élimination de l'agent de refroidissement liquide est situé derrière la tête de soudage (2) dans le sens de soudage.

14. Dispositif selon la revendication 12 **caractérisé en ce qu'un** dispositif de séchage pour amenée d'air chaud ou un dispositif pour le réchauffement inductif de la zone à sécher des tôles ou des bandes (6, 7) est aménagé à distance derrière la tête de soudage (2) - vu dans le sens de soudage -.

15. Dispositif selon la revendication 12 ou l'une des revendications suivantes **caractérisé en ce que** l'ouverture de la buse avant (12) dans le sens de soudage est dirigée vers la zone de la soudure (4) tandis que les ouvertures des buses en arrière (14, 15) sont dirigées dans le sens opposé à la zone de la soudure (4) de manière telle que la buse centrale (14) servant à l'amenée du gaz inerte forme un rideau gazeux entre la buse avant (12) située dans le sens de soudage et la buse (15) servant à l'amenée de l'agent de refroidissement liquide.
